# FASCICULE DE BREVET EUROPEEN

(11) **EP 2 516 255 B1**
(45) Date de publication et mention de la délivrance du brevet: **02.04.2014**
(21) Numéro de dépôt: 10809284.2
(22) Date de dépôt: 16.12.2010
(51) Int. Cl.: B64C 1/14, E06B 3/677

(54) **DISPOSITIF ET PROCÉDÉ DE MAINTIEN DE PARALLÉLISME ENTRE LES DEUX VITRES D'UN DOUBLE VITRAGE D'AÉRONEF**
VORRICHTUNG UND VERFAHREN ZUM EINHALTEN DER PARALLELITÄT ZWISCHEN DEN ZWEI SCHEIBEN EINES DOPPELSCHEIBENFENSTERS EINES FLUGZEUGES
DEVICE AND METHOD OF MAINTAINING PARALLELISM BETWEEN THE TWO PANES OF A DOUBLE PANE AIRCRAFT WINDOW

(30) Priorité: 21.12.2009 FR 0959280
(43) Date de publication de la demande: 31.10.2012
(73) Titulaire: Airbus Operations (S.A.S.), 31060 Toulouse (FR)
(72) Inventeur: CHAUMEL, Pascal, F-31830 Plaisance Du Touch (FR); LIEVEN, Patrick, F-31620 Fronton (FR)
(74) Mandataire: Gicquel, Olivier Yves Gérard
(86) Numéro de dépôt international: PCT/FR2010/052761
(87) Numéro de publication internationale: WO 2011/077030

(56) Documents cités:
- EP-A2- 0 322 776
- EP-A2- 0 846 616
- WO-A1-2005/108729
- US-A- 4 979 342

## Description

La présente invention appartient au domaine des doubles vitrages. Elle concerne plus particulièrement des doubles vitrages soumis à une différence de pression importante entre les deux environnements séparés par ce double vitrage, comme c'est typiquement le cas en aéronautique.

Dans le domaine de l'aéronautique, pour permettre au pilote d'observer l'environnement extérieur de l'avion, le cockpit est muni de différentes vitres et en particulier de vitres latérales pour une visibilité sur les côtés de l'avion.

Pour réduire les nuisances sonores générées par les moteurs, les vitres latérales dans le cockpit sont, en général, pour les avions commerciaux, dotés d'un double vitrage voire de triple vitrage.

Un double vitrage comporte deux vitres séparées par un espace intermédiaire généralement rempli d'un gaz. Ces deux vitres ont en général des épaisseurs très différentes, avec un vitrage externe épais, éventuellement constitué lui-même de plusieurs vitres séparées par des films plastiques, et un vitrage interne mince. Ces deux vitres sont planes et parallèles lorsque les pressions de l'air de chaque coté du double vitrage et dans cet espace intermédiaire sont identiques.

On utilise ici le mot parallélisme au sens de deux surfaces également distantes l'une de l'autre dans toute leur étendue. Les surfaces sont parallèles si toute normale à l'une est une normale à l'autre ; la distance entre les deux vitres, c'est à dire entre deux points, placés chacun sur une des deux surfaces à normale commune, est une constante appelée distance de parallélisme.

Lorsque l'avion est en vol, la différence de pression entre son environnement extérieur (moins de 0,15 bars à 10 000 m) et l'environnement intérieur du cockpit (0,75 bars pour une pressurisation typique équivalente à 1500 mètres dans la cabine de l'avion) avoisine 0,6 bars.

Combinée éventuellement à la différence de raideur des deux vitres, cette différence de pression génère une déformation de la vitre extérieure différente de la déformation de la vitre intérieure. La déformation de la vitre extérieure est naturellement fonction de la différence de pression entre l'environnement extérieur de l'avion et l'environnement intérieur du cockpit et peut atteindre jusqu'à 7 mm selon l'altitude.

La différence de déformation entre les deux vitres provoque une fatigue structurelle de la double paroi. Afin d'y remédier, les brevets EP0322776 et EP0846616 proposent un dispositif visant à atténuer la déformation entre les deux vitres via des moyens de pressurisation de la double paroi.

La différence de déformation provoque également des phénomènes optiques de diffraction et de réflexions multiples au passage du double vitrage, ce qui gêne donc la vision du pilote. Ainsi, par exemple un point lumineux se transforme en une série de points lumineux par les reflets successifs sur les deux vitres ce qui est naturellement très gênant visuellement.

L'objectif de cette invention est de remédier à ce problème de déformation différentielle, en proposant un dispositif qui permet de conserver une visibilité normale à travers le double vitrage lorsqu'il est soumis à une différence de pression de part et d'autre de ce dit double vitrage. Un second objectif de l'invention est de proposer un dispositif simple et économique, qui puisse éventuellement être installée sur des doubles vitrages d'avions existants.

A cet effet, l'invention vise en premier lieu un dispositif destiné à une double paroi comportant au moins une paroi extérieure et une paroi intérieure séparées par un espace intermédiaire rempli d'un gaz, ladite double paroi séparant un environnement intérieur d'un environnement extérieur, une variation de pression étant susceptible de survenir entre ces environnements, ledit dispositif comportant des moyens de conserver la paroi extérieure et la paroi intérieure de cette double paroi principalement parallèles indépendamment de cette variation de pression.

Les moyens de conserver la paroi extérieure et la paroi intérieure de la double paroi principalement parallèles comportent :
- des moyens de mesure comprenant au moins la mesure d'un paramètre de distance directement lié à la déformation différentielle entre les parois intérieures et extérieures.
- des moyens de pressurisation aptes à augmenter ou à diminuer la pression dans l'espace intermédiaire.
- des moyens de commande des moyens de pressurisation en fonction du ou des paramètres mesurés et selon une logique préalablement mémorisée.

On comprend qu'on modifie la courbure d'une ou des parois selon la différence de pression.

Ainsi, dans le cas de double vitrage, si la vitre intérieure présente, après mise en oeuvre du dispositif, la même déformation que la vitre extérieure, c'est à dire si l'on fait en sorte que les deux vitres redeviennent principalement parallèles, il n'y a plus de déformation de l'image transmise à travers le double vitrage. La visibilité pour le pilote est donc normale.

Dans une application particulière, la double paroi est un double vitrage.

Pour conserver le parallélisme entre les deux vitres, l'invention propose d'optimiser la pression dans l'espace intermédiaire du double vitrage. Une variation de pression dans l'espace intermédiaire du double vitrage a pour effet de modifier la déformation de la vitre extérieure et plus encore de créer ou de modifier une/la déformation de la vitre intérieure. Il suffit alors d'optimiser cette pression pour que les deux déformations soient identiques et donc que les deux vitres redeviennent parallèles l'une de l'autre.

Selon un mode préféré de mise en oeuvre, les paramètres mesurés comprennent également la pression de l'environnement extérieur, la pression de l'environnement intérieur et la pression de l'espace intermédiaire.

La déformation de chacune des vitres étant fonction des pressions de part et d'autre de cette vitre, les trois paramètres pression de l'environnement extérieur, pression de l'environnement intérieur et pression de l'espace intermédiaire du double vitrage avec une logique basée sur une connaissance de la physique de la déformation selon les caractéristiques techniques du double vitrage sont suffisants pour calculer la pression optimale à commander dans l'espace intermédiaire.

Selon un mode préféré de mise en oeuvre, la logique préalablement mémorisée utilise une table de correspondance stockée dans une mémoire électronique non volatile.

En construisant une abaque de la déformation pour chacune des deux vitres en fonction des pressions de part et d'autre de cette vitre, on peut créer une table de correspondance qui fournira la pression optimale à commander dans l'espace intermédiaire en fonction des pressions des environnements extérieur et intérieur au double vitrage afin de conserver le parallélisme des deux vitres

Selon un mode préféré de mise en oeuvre, le dispositif comporte un moyen de mise à jour de cette table de correspondance.

L'abaque de la déformation d'une vitre peut varier en fonction du vieillissement de cette vitre. Il est donc judicieux d'avoir un moyen de mettre à jour cette table de correspondance.

Selon un mode préféré de mise en oeuvre, la logique préalablement mémorisée comprend une ou des commandes par défaut à transmettre au moyen de pressurisation en cas de paramètres mesurés non prévus dans la table de correspondance.

La table de correspondance est établie en tenant compte des conditions de pressions extérieures et intérieures envisagées lors de conditions normales de vol. Il est préférable de prévoir le cas où les paramètres mesurés sortent du cadre de cette table de correspondance; ce qui peut être du par exemple à une condition de vol sortant de la normale, ou à des mesures défectueuses des capteurs.

Selon une variante, le ou les paramètres mesurés sont constitués d'une ou plusieurs mesures de distance entre deux points ou un ensemble de couples de points, chacun situés sur une des deux surfaces internes des parois sur une normale commune à ces parois en l'absence de différence de pression.

Si on mesure la distance entre deux points sur chacune des deux vitres et que ces points soient choisis comme des points séparés par la distance de parallélisme dans des conditions de pressions égales donc quand les vitres sont parallèles et que le point correspondant à la vitre extérieure soit choisi dans une zone connue de déformation lors du processus de déformation liées à la différence de pression, on obtient une mesure qui comparée à la distance de parallélisme caractérise la différence de déformation entre les deux vitres. On peut affiner cette mesure en prenant un ensemble de points tout en les choisissant de préférence dans une zone de déformation de la vitre extérieure sensiblement égale.

Dans ce cas, selon un mode préféré de mise en oeuvre, le moyen de mesure de distance est un moyen optique ou tout autre moyen de mesure de distance entre deux points.

Les moyens pour effectuer cette mesure de distance sont des moyens connus de l'homme de l'art en général ces moyens sont des moyens par triangulation optique.

L'invention vise en second lieu un double vitrage comportant au moins une vitre extérieure et une vitre intérieure séparées par un espace intermédiaire rempli d'un gaz, ledit double vitrage séparant un environnement intérieur d'un environnement extérieur, une variation de pression d'une amplitude maximale prédéterminée étant susceptible de survenir entre ces environnements, caractérisé en qu'il comporte un dispositif tel qu'exposé précédemment.

Il est en effet possible que les vitrages soient directement livrés dotés de moyens de mesure de distance entre les vitres, et de moyens de pressurisation, des moyens de commandes étant ici constitués de logiciels mis en oeuvre sur un calculateur avion pré-existant.

Sous un autre aspect, l'invention vise également un procédé d'asservissement de parallélisme entre une paroi extérieure et une paroi intérieure d'une double paroi, séparées par un espace intermédiaire rempli d'un gaz sous une pression intermédiaire, ladite double paroi séparant un environnement extérieur d'un environnement intérieur, caractérisé en qu'il comporte des étapes :
- de mesure d'au moins un paramètre directement lié à la déformation différentielle entre les parois intérieure et extérieure,
- de calcul d'une consigne de pression cible à établir dans l'espace intermédiaire,
- de maintien de la consigne tant que la mesure du paramètre n'indique pas un retour au parallélisme entre les parois

Sous encore un autre aspect, l'invention vise un produit programme d'ordinateur, destiné à être mis en oeuvre pour un véhicule comportant au moins une double paroi comportant au moins une paroi extérieure et une paroi intérieure séparées par un espace intermédiaire rempli d'un gaz, utilisé pour isoler un environnement intérieur d'un environnement extérieur, une variation de pression d'une amplitude maximale prédéterminée étant susceptible de survenir entre ces environnements, ledit produit programme d'ordinateur comprenant des instructions de code de programme pour l'exécution des étapes d'un procédé d'asservissement de parallélisme entre les parois extérieure et intérieure de la double paroi, comportant des étapes :
- d'acquisition de mesures d'au moins un paramètre directement lié à la déformation différentielle entre les parois intérieure et extérieure,
- de calcul d'une consigne de pression cible à établir dans l'espace intermédiaire,
- de maintien de la consigne tant que la mesure du paramètre n'indique pas un retour au parallélisme entre les parois,
lorsque ledit programme est exécuté sur un ordinateur ou sur un système embarqué permettant l'exécution d'une telle suite d'instructions logicielles

Dans la pratique, le logiciel sera mis en oeuvre par un calculateur embarqué dans l'avion si on est dans le cas d'un double vitrage d'avion.

Les buts et avantages de l'invention seront mieux compris à la lecture de la description qui suit, faite en référence aux dessins dans lesquels :
La figure 1 est une vue en coupe schématique d'un double vitrage de type aéronautique.
La figure 2 est une vue de détail de la figure 1.
La figure 3 schématise une déformation de la vitre extérieure du double vitrage et la déformation de la vitre intérieure du double vitrage lorsque la pression dans l'espace intermédiaire du double vitrage est optimisée par rapport à la pression extérieure et à la pression intérieure de l'habitacle.
La figure 4 est un bloc diagramme général du dispositif selon l'invention.
La figure 5 est un bloc diagramme d'une variante de réalisation du dispositif selon l'invention.

L'invention est destinée à être utilisée dans un double vitrage situé dans un habitacle évoluant dans un environnement dont la pression peut être très différente de la pression intérieure à l'habitacle. Dans le présent exemple de réalisation, cet habitacle est un cockpit d'avion du type volant à haute altitude et comportant un habitacle pressurisé.

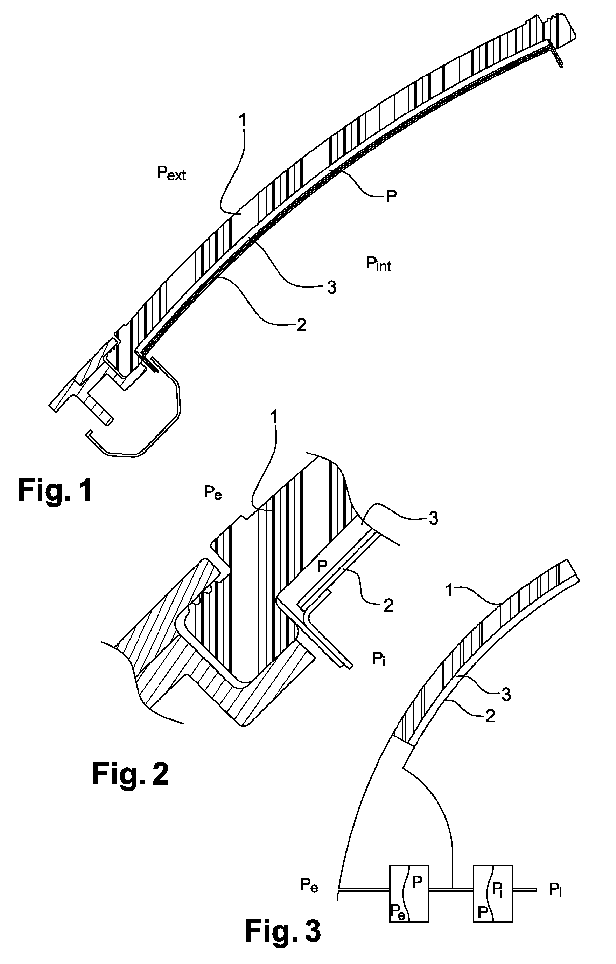

Dans une configuration classique et telle que représentée en coupe sur la figure 1 et plus en détail sur la figure 2, un double vitrage comprend au moins une vitre extérieure 1 et une vitre intérieure 2 permettant de séparer deux environnements qui sont l'extérieur de l'habitacle 4 soumis à une pression Pₑₓₜ et l'intérieur de l'habitacle 5 soumis à une pression Pᵢₙₜ.

La vitre extérieure 1, qui a une fonction structurale de tenue à la différence de pression entre les environnements extérieurs et intérieurs (Pₑₓₜ - Pᵢₙₜ), est généralement nettement plus épaisse que la vitre intérieure 2, destinée simplement à procurer une isolation phonique vis à vis des bruits extérieurs.

Chacune de ces deux vitres est une plaque transparente en verre, acrylique, polycarbonate ou tout autre matériau connu, et est éventuellement composée de plusieurs épaisseurs de matériaux différents collées ensemble.

Le double vitrage comporte de plus un espace intermédiaire 3 défini comme l'espace compris entre la vitre intérieure 2 et la vitre extérieure 1, et délimité sur le pourtour du double vitrage par un joint d'étanchéité. Cet espace intermédiaire 3, usuellement rempli de gaz sec ou d'air identique à l'air de l'habitacle, est soumis à une pression intermédiaire P.

De façon classique, les données de pression extérieure Pₑₓₜ et intérieure Pᵢₙₜ sont utilisées dans le cadre du pilotage de l'avion, elles sont donc mesurées par des moyens connus et sont disponibles pour une utilisation dans la présente invention. L'amplitude maximale des variations de pression extérieure Pₑₓₜ et intérieure Pᵢₙₜ au cours du vol est supposée connue, elle est déterminée par l'altitude de vol maximale et la choix de pressurisation interne de l'avion. Selon la rigidité de la vitre extérieure 1, elle subit lors de la baisse progressive de pression extérieure à l'avion une déformation (bombage) dont l'amplitude maximale est également connue.

Le dispositif selon l'invention comporte par ailleurs un moyen de mesure 6 de la pression intermédiaire P existant dans l'espace intermédiaire 3 entre les deux vitres. Ce moyen de mesure 6 est de type connu de l'homme de l'art, et comporte par exemple un manomètre à sortie numérique et un capteur disposé dans l'espace intermédiaire entre les vitres.

Le double vitrage selon l'invention comprend un moyen 5 de pressurisation / dépressurisation de l'espace intermédiaire 3, par exemple constitué d'une pompe de type connu, reliée à l'espace intermédiaire 3 par une valve traversant le joint d'étanchéité. Il permet d'agir sur cette pression intermédiaire P en l'augmentant ou en la diminuant d'une valeur Δp.

Ce moyen de pressurisation / dépressurisation 5 est piloté par un dispositif électronique 7 qui reçoit également en entrées les mesures de pression extérieure Pₑₓₜ, intérieure Pᵢₙₜ et intermédiaire P en temps réel lors du vol.

Ce dispositif électronique 7 se présente dans le présent exemple non limitatif sous la forme d'un processeur 9, et est doté d'une logique de calcul, mémorisée dans une mémoire non volatile 8. Les éléments constitutifs du dispositif électronique sont connus en soi et ne sont donc pas détaillés ici.

Dans le mode de réalisation décrit ici à titre non limitatif, une table de correspondance (abaque) entre la pression P à appliquer à l'espace intermédiaire 3 et les valeurs des pressions extérieure Pₑₓₜ, intérieure Pᵢₙₜ est préalablement mémorisée dans la mémoire non volatile 8.

Cette abaque est créée initialement soit par un calcul théorique de déformation de chaque vitrage selon ses caractéristiques mécaniques de raideur et les conditions de pression, soit par mesure directe de déformation différentielle, par exemple lors de tests au sol en soumettant un double vitrage représentatif à différents couples de pressions extérieure et intérieure, et en testant la pression intermédiaire qui minimise ladite déformation différentielle.

En ce qui concerne sa mise en oeuvre, le dispositif d'asservissement de parallélisme de double vitrage est mis en marche dès la mise en route de l'avion, simultanément à la mise en route du système de gestion de la pressurisation avion, dont il dépend.

Le processeur 9 reçoit à intervalles récurrents les valeurs des pressions extérieure Pₑₓₜ, intérieure Pᵢₙₜ et intermédiaire P. Par lecture de la table de correspondance avec comme entrée le couple de pression (Pₑₓₜ, Pᵢₙₜ) le plus proche, le processeur 9 détermine la pression cible P_{c} dans l'espace intermédiaire 3 supposée amener une déformation différentielle minimale entre les deux vitrages. La table de correspondance peut en variante être constituée d'une fonction mathématique utilisant en entrée le couple de pression (Pₑₓₜ, Pᵢₙₜ), et donnant en sortie une pression cible P_{c}.

Le processeur 9 envoie donc au moyen de pressurisation / dépressurisation 5 un ordre de pressurisation si Δp = P_{c} - P>0, et de dépressurisation si Δp < 0. Tant que l'écart Δp entre P_{c} et P est supérieur à une valeur minimum préalablement choisie et mémorisée, le processeur 9 continue à envoyer cette consigne. La vitesse de pressurisation / dépressurisation est limitée par construction du moyen 5 de pressurisation / dépressurisation pour éviter les phénomènes de condensation ou de déformation trop brutale d'un des vitrages.

La pression P dans l'espace intermédiaire 3 rejoint donc progressivement la pression cible P_{c}, et la déformation différentielle est ainsi minimisée, rétablissant le parallélisme des vitres et la visibilité normale pour le pilote/

Afin de prendre en compte par exemple l'évolution dans le temps des caractéristiques mécaniques du double vitrage, ou un changement de double vitrage sans changer de dispositif de maintien de parallélisme, lé mémoire non volatile 8 peut être mise à jour par des moyens connus, et par exemple par remplacement d'un composant mémoire ou par écriture par le processeur dans cette mémoire.

Dans des conditions normales de vol, le couple (Pₑₓₜ, Pᵢₙₜ) existe dans la table de correspondance. Toutefois dans le cas ou ce couple se situe en dehors de la table de correspondance (cas de panne d'un des capteurs de pression), le processeur choisit par sécurité une consigne par défaut Δp=0 qui stoppe la modification de pression intermédiaire.

De la même manière, dans des conditions courantes de vol, les évolutions de Pₑₓₜ, Pᵢₙₜ et P sont progressives à chaque lecture. Si ce n'est pas le cas, et par exemple si la variation de valeur mesurée de l'un de ces trois paramètres est supérieure à un pourcentage préalablement choisi, traduisant vraisemblablement une défaillance d'un des capteurs, le processeur 9 choisit par défaut Δp=0.

De même, si la pression intermédiaire mesurée n'évolue pas lors de plusieurs mesures successives, traduisant un défaut probable du moyen de pressurisation 5, le processeur 9 choisit également d'arrêter ce moyen de pressurisation.

La description précédente a été faite avec un dispositif électronique dédié à l'invention. Il est clair que le moyen 5 de pressurisation / dépressurisation peut être piloté par un calculateur de l'avion normalement dédié à d'autres tâches, mais disposant de temps de calcul et d'espace mémoire disponible. Dans ce cas les éléments additionnels requis par le dispositif selon l'invention se limitent à des moyens de mesure de la pression intermédiaire P et des moyens de faire varier cette pression, reliés tous deux audit calculateur qui doit également comporter en entrées les pressions extérieures et intérieures.

La portée de la présente invention ne se limite pas aux détails des formes de réalisation ci-dessus considérées à titre d'exemple, mais s'étend au contraire aux modifications à la portée de l'homme de l'art.

Dans une variante, on remplace la mesure des pressions extérieure, intérieure et intermédiaire, dont les trois valeurs forment un ensemble de paramètres directement liés à la déformation différentielle entre les vitres intérieures et extérieures, par un autre paramètre de mesure de déformation différentielle.

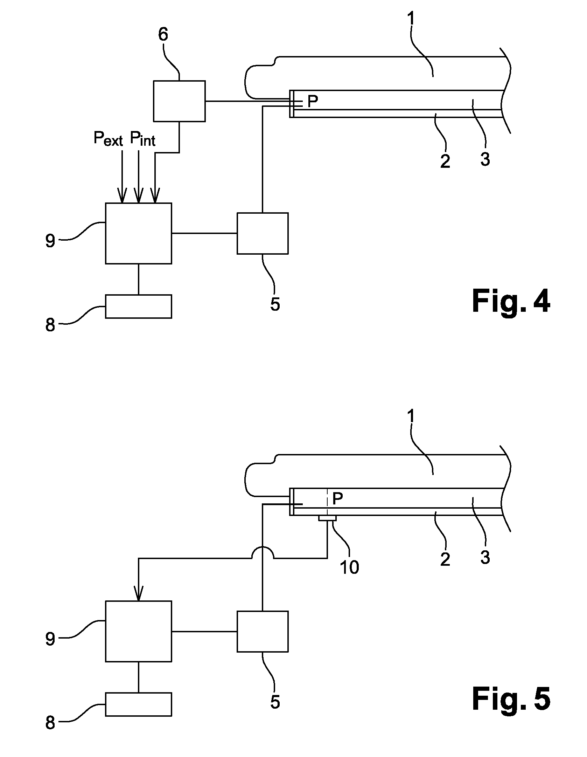

Dans ce cas, représenté par la figure 5, le dispositif comporte un moyen 10 de mesure de distance entre deux points (ou plusieurs groupes de deux points) disposés respectivement sur les vitres extérieure et intérieure, et sur une même normale à ces vitres en l'absence de différence de pression entre l'intérieur et l'extérieur, comme c'est par exemple le cas au sol. La forme de la déformation de la vitre extérieure étant prévisible, on choisit un ou plusieurs points sur la surface de vitrage placés à des endroits subissant le plus cette déformation sans pour autant gêner la visibilité du pilote.

Le processeur 9 utilise alors comme entrée cette mesure de distance (ou ces mesures de distance) à la place des mesures de pressions. La distance de parallélisme dépend des caractéristiques géométriques du double vitrage et est donc stockée dans la mémoire non volatile 8 par exemple au moment de la mise en place de cette mémoire.

Le moyen de mesure de distance 10 est de type connu, par exemple une mesure optique par infra-rouge non décrit ici en détails.

Tant que les surfaces des vitres sont parallèles, la distance mesurée pour chaque couple de points est constante et égale à la distance de parallélisme entre les deux surfaces. Au contraire, si une des vitres se déforme plus que l'autre, la distance varie et caractérise donc la déformation différentielle.

Dans cette première mise en oeuvre, le processeur 9 utilise la différence entre la moyenne des distances et la distance de parallélisme mémorisée pour calculer une consigne de pressurisation, avec comme règle initiale que si la distance augmente entre les vitres, il faut réduire la pression intermédiaire, et inversement. Les mesures successives au cours du temps de cette valeur de distance moyenne et de son écart à la distance de parallélisme qui est la distance cible, permettent alors de créer une boucle d'asservissement.

L'avantage de la mesure optique est que l'on mesure directement le paramètre caractéristique du problème à résoudre : la déformation différentielle, et le dispositif est donc adaptable sans modification de logique programmée à divers types de double vitrages, alors que l'utilisation d'une table de correspondance nécessité une adaptation à chaque type de double vitrage (dimensions, épaisseurs, mode de fixation...).

Le dispositif peut être incorporé à un double vitrage avant son installation, ou au contraire être monté sur un double vitrage existant, en insérant la valve de pressurisation à travers le joint d'étanchéité du double vitrage, et en connectant le dispositif électronique aux câbles de mesure des pressions extérieure et intérieure. Le dispositif électronique de commande peut également être remplacé par une simple connexion à un calculateur avion pré-existant, sur lequel est implanté un logiciel de commande des moyens de pressurisation en fonction des données liées à la différence de parallélisme.

Dans une autre variante, le dispositif peut s'adapter sur un simple vitrage en comportant alors, outre les éléments exposés antérieurement, une vitre intérieure 2 à installer en face intérieure d'un vitrage existant.

Il est clair que, dans le cas le plus fréquent, l'avion étudié comporte plusieurs vitres dotées de doubles vitrages. Dans une variante permettant une économie de moyens, un seul dispositif électronique général (vraisemblablement un calculateur avion pré-existant) pilote les moyens de pressurisation de chacun des espaces intermédiaires des doubles vitrages. Chaque double vitrage reste cependant doté de son propre moyen de mesure de déformation différentielle pour tenir compte de ses conditions de déformation propres.

Le dispositif et le procédé selon l'invention s'appliquent à toute double enveloppe séparant deux environnements supportant des pressions très différentes et pour lesquels une différence de déformation des parois peut être dommageable. C'est le cas par exemple de navires transportant des liquides, ou des gaz sous pression, et dotés de double coque.

De la même manière, on comprend que la contrainte de parallélisme peut être généralisée à une contrainte géométrique quelconque entre les deux parois, sans modification essentielle du procédé.

## Revendications

1. Dispositif destiné à une double paroi comportant au moins une paroi extérieure (1) et une paroi intérieure (2) séparées par un espace intermédiaire (3) rempli d'un gaz, ladite double paroi séparant un environnement intérieur d'un environnement extérieur, une variation de pression étant susceptible de survenir entre ces environnements, ledit dispositif comportant des moyens de conserver la paroi extérieure (1) et la paroi intérieure (2) de cette double paroi principalement parallèles indépendamment de cette variation de pression, les moyens de conserver la paroi extérieure et la paroi intérieure de la double paroi principalement parallèles comportant des moyens de pressurisation (5) aptes à augmenter ou à diminuer la pression dans l'espace intermédiaire (3);
**caractérisé en ce que** les moyens de conserver la paroi extérieure et la paroi intérieure de la double paroi principalement parallèles comportent :
- des moyens de mesure (6, 10) comprenant au moins la mesure d'un paramètre de distance directement lié à la déformation différentielle entre les parois intérieures et extérieures;
- des moyens de commande des moyens de pressurisation en fonction du ou des paramètres mesurés et selon une logique préalablement mémorisée.

2. Dispositif selon la revendication 1 **caractérisé en ce que** les paramètres mesurés comprennent également la pression de l'environnement extérieur, de la pression de l'environnement intérieur et de la pression de l'espace intermédiaire.

3. Dispositif selon la revendication 1 ou 2 **caractérisé en ce que** la logique préalablement mémorisée utilise une table de correspondance (9) stockée dans une mémoire électronique (8) non volatile.

4. Dispositif selon la revendication 3 caractérisé en qu'il comporte des moyens de mettre à jour cette table de correspondance (9).

5. Dispositif selon la revendication 3 ou 4 en ce que la logique préalablement mémorisée comprend une ou des commandes par défaut à transmettre au moyen de pressurisation (5) en cas de paramètres mesurés non prévus dans la table de correspondance (9).

6. Dispositif selon l'une quelconque des revendications 1 à 5, **caractérisé en ce que** le ou les paramètres mesurés sont constitués d'une ou plusieurs mesures de la distance entre deux points ou un ensemble de couples de points, chacun situé sur une des deux surfaces internes des parois sur une normale commune à ces parois en l'absence de différence de pression.

7. Dispositif selon la revendication 6 **caractérisé en ce que** le moyen de mesure de distance entre deux points est un moyen optique.

8. Double vitrage comportant au moins une vitre extérieure (1) et une vitre intérieure (2) séparées par un espace intermédiaire (3) rempli d'un gaz, ledit double vitrage séparant un environnement intérieur d'un environnement extérieur, une variation de pression d'une amplitude maximale prédéterminée étant susceptible de survenir entre ces environnements, caractérisé en qu'il comporte un dispositif selon l'une quelconque des revendication précédentes.

9. Procédé d'asservissement de parallélisme entre une paroi extérieure (1) et une paroi intérieure (2) d'une double paroi, séparées par un espace intermédiaire (3) rempli d'un gaz sous une pression intermédiaire cible P, ladite double paroi séparant un environnement extérieur d'un environnement intérieur, le procédé d'asservissement étant caractérisé en qu'il comporte des étapes :
- de mesure d'au moins un paramètre de distance directement lié à la déformation différentielle entre les parois intérieure et extérieure,
- de calcul d'une consigne de pression Pc à établir dans l'espace intermédiaire,
- de maintien de la consigne tant que la mesure du paramètre n'indique pas un retour au parallélisme entre les parois.

10. Produit programme d'ordinateur, destiné à être mis en oeuvre pour un véhicule comportant au moins une double paroi comportant au moins une paroi extérieure (1) et une paroi intérieure (2) séparées par un espace intermédiaire (3) rempli d'un gaz, utilisé pour isoler un environnement intérieur d'un environnement extérieur, une variation de pression d'une amplitude maximale prédéterminée étant susceptible de survenir entre ces environnements, ledit produit programme d'ordinateur comprenant des instructions de code de programme pour l'exécution des étapes d'un procédé d'asservissement de parallélisme entre les parois extérieure et intérieure de la double paroi, comportant des étapes :
- d'acquisition de mesures d'au moins un paramètre de distance directement lié à la déformation différentielle entre les parois intérieure et extérieure,
- de calcul d'une consigne de pression cible à établir dans l'espace intermédiaire,
- de maintien de la consigne tant que la mesure du paramètre n'indique pas un retour au parallélisme entre les parois,
lorsque ledit programme est exécuté sur un ordinateur ou sur un système embarqué permettant l'exécution d'une telle suite d'instructions logicielles.

## Patentansprüche

1. Vorrichtung, die für eine Doppelwand bestimmt ist, die wenigstens eine Außenwand (1) und eine Innenwand (2) umfasst, die durch einen Zwischenraum (3) getrennt sind, der mit einem Gas gefüllt ist, wobei die Doppelwand eine innere Umgebung von einer äußeren Umgebung trennt, wobei eine Druckänderung zwischen diesen Umgebungen auftreten kann, wobei die Vorrichtung Mittel umfasst, um die Außenwand (1) und die Innenwand (2) dieser Doppelwand unabhängig von dieser Druckänderung im Wesentlichen parallel zu halten, wobei die Mittel, um die Außenwand und die Innenwand der Doppelwand im Wesentlichen parallel zu halten, Druckbeaufschlagungsmittel (5) umfassen, die den Druck in dem Zwischenraum (3) erhöhen oder erniedrigen können;
**dadurch gekennzeichnet, dass** die Mittel, um die Außenwand und die Innenwand der Doppelwand im Wesentlichen parallel zu halten, Folgendes umfassen:
- Messmittel (6, 10), die wenigstens das Messen eines Abstandsparameters, der direkt mit der differentiellen Verformung zwischen der Innen- und der Außenwand umfassen;
- Mittel zum Steuernder Druckbeaufschlagungsmittel als Funktion des oder der gemessenen Parameter und in Übereinstimmung mit einer im Voraus gespeicherten Logik.

2. Vorrichtung nach Anspruch 1, **dadurch gekennzeichnet, dass** die gemessenen Parameter außerdem den Druck der äußeren Umgebung, den Druck der inneren Umgebung und den Druck des Zwischenraums umfassen.

3. Vorrichtung nach Anspruch 1 oder 2, **dadurch gekennzeichnet, dass** die im Voraus gespeicherte Logik eine Korrespondenztabelle (9) verwendet, die in einem nichtflüchtigen elektronischen Speicher (8) gespeichert ist.

4. Vorrichtung nach Anspruch 3, **dadurch gekennzeichnet, dass** sie Mittel zum Aktualisieren dieser Korrespondenztabelle (9) umfasst.

5. Vorrichtung nach Anspruch 3 oder 4, **dadurch gekennzeichnet, dass** die im Voraus gespeicherte Logik einen oder mehrere Befehle enthält, die in dem Fall, in dem gemessene Parameter nicht in der Korrespondenztabelle (9) vorgesehen sind, standardmäßig zu dem Druckbeaufschlagungsmittel (5) gesendet werden.

6. Vorrichtung nach einem der Ansprüche 1 bis 5, **dadurch gekennzeichnet, dass** der oder die gemessenen Parameter aus einer oder mehreren Messungen des Abstands zwischen zwei Punkten oder einer Gesamtheit von Paaren von Punkten gebildet sind, wovon sich jeder bei Abwesenheit einer Druckdifferenz auf einer der zwei inneren Oberflächen der Wände auf einer diesen Wänden gemeinsamen Normalen befinden.

7. Vorrichtung nach Anspruch 6, **dadurch gekennzeichnet, dass** das Mittel zum Messen des Abstands zwischen zwei Punkten ein optisches Mittel ist.

8. Doppelverglasung, die wenigstens eine Außenscheibe (1) und eine Innenscheibe (2) umfasst, die durch einen mit einem Gas gefüllten Zwischenraum (3) getrennt sind, wobei die Doppelverglasung eine innere Umgebung von einer äußeren Umgebung trennt, wobei eine Druckänderung mit einer vorgegebenen maximalen Amplitude zwischen diesen Umgebungen auftreten kann, **dadurch gekennzeichnet, dass** sie eine Vorrichtung nach einem der vorhergehenden Ansprüche umfasst.

9. Verfahren zum Regeln der Parallelität zwischen einer Außenwand (1) und einer Innenwand (2) einer Doppelwand, die durch einen Zwischenraum (3) getrennt sind, der mit einem Gas mit einem Soll-Zwischendruck (P) gefüllt ist, wobei die Doppelwand eine äußere Umgebung von einer inneren Umgebung trennt, wobei das Regelungsverfahren **dadurch gekennzeichnet ist, dass** es die folgenden Schritte umfasst:
- Messen wenigstens eines Abstandsparameters, der direkt mit der differentiellen Verformung zwischen der Innen- und der Außenwand in Verbindung steht,
- Berechnen eines Drucksollwerts Pc, der in dem Zwischenraum herzustellen ist,
- Halten des Sollwerts, solange die Messung des Parameters keine Rückkehr zu der Parallelität zwischen den Wänden angibt.

10. Computerprogrammprodukt, das dazu bestimmt ist, für ein Fahrzeug ausgeführt zu werden, das wenigstens eine Doppelwand enthält, die wenigstens eine Außenwand (1) und eine Innenwand (2) umfasst, die durch einen mit einem Gas gefüllten Zwischenraum (3) getrennt sind, die verwendet wird, eine innere Umgebung von einer äußeren Umgebung zu isolieren, wobei eine Druckänderung mit einer vorgegebenen maximalen Amplitude zwischen diesen Umgebungen auftreten kann, wobei das Computerprogrammprodukt Programmcode-Befehle enthält, um die Schritte eines Verfahrens zum Regeln der Parallelität zwischen der Außen- und der Innenwand der Doppelwand auszuführen, das die folgenden Schritte umfasst:
- Erfassen von Messungen wenigstens eines Abstandsparameters, der direkt mit der differentiellen Verformung zwischen der Innen- und der Außenwand in Verbindung steht,
- Berechnen eines Drucksollwerts, der in dem Zwischenraum herzustellen ist,
- Halten des Sollwerts, solange die Messung des Parameters keine Rückkehr zu der Parallelität zwischen den Wänden angibt,
wenn das Programm auf einem Computer oder auf einem Bordsystem ausgeführt wird, das die Ausführung einer solchen Folge von Software-Befehlen ermöglicht.

## Claims

1. Device intended for a double wall comprising at least one outer wall (1) and one inner wall (2) separated by a gas-filled intermediate space (3), said double wall separating an inside environment from an outside environment, a pressure variation being likely to occur between these environments, said device comprising means for maintaining the outer wall (1) and the inner wall (2) of this double wall mainly parallel independently of this pressure variation, the means for maintaining the outer wall and the inner wall of the double wall mainly parallel comprising pressurization means (5) suitable for increasing or reducing the pressure in the intermediate space (3);
**characterized in that** the means for maintaining the outer wall and the inner wall of the double wall mainly parallel comprise:
- measurement means (6, 10) comprising at least the measurement of a distance parameter directly linked to the differential deformation between the inner and outer walls;
- means for controlling the pressurization means on the basis of the measured parameter or parameters and according to a previously stored logic.

2. Device according to Claim 1, **characterized in that** the measured parameters also comprise the pressure of the outside environment, the pressure of the inside environment and the pressure of the intermediate space.

3. Device according to Claim 1 or 2, **characterized in that** the previously stored logic uses a mapping table (9) stored in a non-volatile electronic memory (8).

4. Device according to Claim 3, **characterized in that** it comprises means for updating this mapping table (9).

5. Device according to Claim 3 or 4, **characterized in that** the previously stored logic comprises one or more default commands to be transmitted to the pressurization means (5) in the event of measured parameters not being predicted in the mapping table (9).

6. Device according to any one of Claims 1 to 5, **characterized in that** the measured parameter or parameters is/are constituted of one or more measurements of the distance between two points or a set of pairs of points, each situated on one of the two inner surfaces of the walls on a normal common to these walls in the absence of pressure difference.

7. Device according to Claim 6, **characterized in that** the measurement of distance means between two points is an optical mean.

8. Double glazing, comprising at least one outer pane (1) and one inner pane (2) separated by a gas-filled intermediate space (3), said double glazing separating an inside environment from an outside environment, a pressure variation of a predetermined maximum amplitude being likely to occur between these environments, **characterized in that** it comprises a device according to any one of the preceding claims.

9. Device for controlling parallel alignment between an outer wall (1) and an inner wall (2) of a double wall, separated by a gas-filled intermediate space (3) under target intermediate pressure P, said double wall separating an outside environment from an inside environment, the control method being **characterized in that** it comprises steps:
- of measuring at least one distance parameter directly linked to the differential deformation between the inner and outer walls,
- of calculating a pressure setpoint p_{c} to be established in the intermediate space,
- of maintaining the setpoint as long as the measurement of the parameter does not indicate a return to the parallel alignment between the walls.

10. Computer program product, intended to be implemented for a vehicle comprising at least one double wall comprising at least one outer wall (1) and one inner wall (2) separated by a gas-filled intermediate space (3), used to insulate an inside environment from an outside environment, a pressure variation of a predetermined maximum amplitude being likely to occur between these environments, said computer program comprising program code instructions for the execution of the steps of a method for controlling parallel alignment between the outer and inner walls of the double wall, comprising steps:
- of acquisition of measurements of at least one distance parameter directly linked to the differential deformation between the inner and outer walls,
- of calculation of a target pressure setpoint to be established in the intermediate space,
- of maintaining of the setpoint as long as the measurement of the parameter does not indicate a return to the parallel alignment between the walls,
when said program is executed on a computer or on an embedded system making it possible to execute such a series of software instructions.
